# EUROPEAN PATENT APPLICATION

(11) **EP 1 493 714 A1**
(43) Date of publication of application: **05.01.2005**
(21) Application number: 04005975.0
(22) Date of filing: 12.03.2004
(51) Int. Cl.: C01B 31/02, C12Q 1/68, C12N 15/00

(54) **Encapsulation of biomolecules inside carbon nanotube**

(30) Priority: 14.03.2003 EP 03005850
(71) Applicant: Max-Planck-Gesellschaft zur Förderung der Wissenschaften e.V., 80539 München (DE)
(72) Inventor: Gao, Huajian, 70192 Stuttgart (DE); Kong, Yong, 70374 Stuttgart (DE); Cui, Daxiang, Prof., Shanghai Jiao Tong University, Shanghai 200030 (CN); Ozkan, Cengiz O., La Jolla, CA 92037 (US)
(74) Representative: VOSSIUS & PARTNER

(57) **Abstract**

A method for encapsulating a biomodecule inside a carbon nanotube is provided. According to the method, the carbon nanotube and the biomolecule, being preferably a DNA molecule, are provided, and the biomolecule is passively, e.g. by van der Waals interactions or hydrophobic forces, and/or actively, e.g. by changing the charge state of the carbon nanotube, encapsulated inside the carbon nanotube. A bio-nano system comprising a carbon nanotube and a biomolecule, wherein the biomolecule is encapsulated inside the carbon nanotube and the use of such a bio-nano system are further disclosed.

## Description

The present invention relates to the insertion and/or encapsulation of biomolecules, in particular deoxyribonucleic acid (DNA) molecules, inside carbon nanotubes.

Functionalization of novel nano-scale materials with chemical or biological molecules could lead to new types of miniature devices for chemical and/or biological applications such as probes and sensors. In the case of carbon nanotube (CNT) much interest has been devoted to utilizing or controllably modifying its intrinsic chemical and physical properties by attaching molecules to its outside. Besides the sidewall or tip functionalization, it has been found that molecules such as C₆₀, metallofullerences, water and gas molecules as well as metal particles such as Se, Co, Sb, Ge, Nie, Fe have been filled into carbon nanotube, however, so far TiC, NbC, Fe3C, SiC and BCx can not be encapsulated inside a carbon nanotube. It has become interesting to explore functionalizing CNT with biological molecules including peptides and nucleic acids for applications in bio-engineering and clinical medicine. As a class of stiff, stable, non-toxic and hollow nanoscale materials with many unique mechanical, chemical and physical properties, CNTs may play an important role in the nano-technology of gene and drug delivery systems.

In WO02/79514, a class of biological sensing devices is disclosed that include a substrate comprising an array of carbon nanotubes to which biological molecules, in particular DNA is chemically attached.

US 2001/0051367 relates to molecular nanowires from a single walled carbon nanotubes wherein the nanotubes enclose foreign material capable of forming thread-like material having a solid form at ambient temperatures and pressures.

A method for immobilizing and/or crystallizing macromolecules, chemical reagence used in the method, resulting products and uses of these products in the field of materials and structural biology, in particular as biosensors or as biomaterials are described in WO99/57564. According to the method described therein, a biological macromolecule in solution with the carbon nanotubes closed at their ends are incubated, without steering, for at least 15 minutes in suitable temperature and pH conditions.

In US-A-5-866 34, graphitic nanotubes, which include tubular fullerenes and fibrils, which are functionalized in chemical substitutions are used as solids supports in electrogenerated chemiluminescence assays. The nanotubes are chemically modified with functional group biomolecules prior to use in an assay.

Further background information can be found in the following publications:
1. M. Bruchez, M. Moronne, P. Gin, S. Weiss, A. P. Alivisatos, *Science* **281,** 2013 (1998).
2. W. Chan, S. Nie, *Science* **293,** 2016 (1998).
3. S. S. Wong, E. Joselevich, A. T. Woolley, C. L. Cheung, C. M. Lieber, *Nature* **394,** 52 (1998).
4. T. Taton, C. Mirkin, R. Letsinger, *Science* **289,** 1757 (2000).
5. Y. Cui, Q. Wei, H. Park, C. M. Lieber, *Science* **293,** 1289 (2001).
6. F. Erlanger, B. Chen, M. Zhu, L. Brus, *Nano Lett.* **1,** 465 (2001).
7. M. Shim, N. W. S. Kam, R. J. Chen, Y. Li, H. Dai, *Nano Lett.* **2,**285 (2002).
8. C. V. Nguyen, L. Delzeit, A. M. Cassell, J. Li, J. Han, M. Meyyappan, *Nano Lett.* **2,** 1079 (2002).
9. E. V. Basiuk, E. V. Rybak-Akimova, V. A. Basiuk, D. Acosta-Najarro, J. M. Saniger, *Nano Lett.* **2**, 1249 (2002).
10. C. Dwyer, M. Guthold, M. Falvo, M. Washburn, R. Superfine, D. Erie, *Nanotech.* **13,** 601 (2002).
11. B. W. Smith, M. Monthioux, D. E. Luzzi, *Nature* **396,** 323 (1998).
12. K. Hirahara, K. Suenaga, S. Bandow, H. Kato, T. Okazaki, H. Shinohara, S. Iijima, *Phys. Rev. Lett.* **85,** 5384 (2000).
13. G. Hummer, J. C. Rasalah, J. P. Noworyta, *Nature* **414,** 188 (2001).
14. Y. Gogotsi, J. A. Libera, A. Guvenc-Yazicioglu, C. M. Megaridis, *Appl. Phys. Lett.* **79**, 1021 (2001).
15. E. Lindahl, B. Hess, D. van der Spoel, *J. Mol. Mod.* **7**, 306 (2001).
16. H. J. C. Berendsen, J. P. M. Postma, A. D. Nola, J. R. Haak, *J. Chem. Phys.* **81,** 3684 (1984).
17. O. Teleman, B. Jönsson, S. Engström, *Mol. Phys.* **60,** 193 (1987).
18. T. Darden, D. York, L. Pedersen, *J. Chem. Phys.* **98,** 10089 (1993).
19. W. F. van Gunsteren, H. J. C. Berendsen, *GROMOS-87 Manual* (Biomos BV Nijenborgh 4, 9747 AG Groningen, The Netherlands 1987).
20. A. K. Rappe, C. J. Casewit, K. S. Colwell, W. A. Goddard III, W. M. Skiff, *J. Am. Chem. Soc.* **114**, 10024 (1992).
21. J. H. Walther, T. Halicioglu, R. Jaffe, P. Koumoutsakos, *J. Phys. Chem. B* **105,** 9980 (2001).
22. M. J. Bojan, W. A. Steele, *Langmuir* **3,** 1123 (1987).
23. D. van der Spoel, *et al., Gromacs User Mannual version 3.1.1,* (Groningen, The Netherlands).
24. S.C. Tsang, Y.K. Chen, P.J.F. Harris, M.L.H. Green, *Nature* **1994,** *372*,159.
25. Y. Cui, Q. Wei, H. Park, C.M. Lieber, *Science* **2001**, *293*, 1289.
26. F. Erlanger, B. Chen, M. Zhu, L. Brus, *Nano Lett.* **2001,** *1*, 465.
27. M. Shim, N. W.S. Kam, R.J. Chen, Y. Li, H. Dai, *Nano Lett.* **2002,** *2*, 285.
28. E.V. Basiuk, E.V. Rybak-Akimova, V.A. Basiuk, D. Acosta-Najarro, J.M. Saniger, *Nano Lett.* **2002,** *2*, 1249.
29. M. Mertig, L.C. Ciacchi, R. Seidel, W. Pompe, A. De Vita, DNA as a selective metallization template. *Nano. Lett.* **2002**, 2, 841.
30. Z.J. Guo, P.J. Sadler, S.C. Tsang, *Adv. Mater.* **1998,***10*, 701.

It is an object of the present invention to provide a new artificial bio-nano-system. It is further an object to provide a new or alternative way to functionalize carbon nanotubes or other nano-porous materials by water solutes of molecular clusters or nanoparticles.

These objects are achieved with the features of the claims.

According to the present invention, a method for encapsulating a biomolecule inside carbon nanotubes is provided. The biomolecule comprises in particular a DNA molecule. According to the invention, the carbone nanotube and the biomolecule are provided, and the biomolecule is passively and/or actively encapsulated inside the carbon nanotube. The invention further provides a bio-nanosystem comprising a carbon nanotube and a biomolecule, and the use of such a bio-nanosystem.

Bio-nano-systems according to the invention have general implications on functionalizing carbon nanotubes or other nanoporous materials. Encapsulated CNT-DNA molecular complex may be exploited for applications such as DNA modulated molecular electronics, molecular sensors, electronic DNA sequencing, and nanotechnology of gene and drug delivery systems.

In the following, the invention will be explained in greater detail with reference to the accompanying drawings. In the drawings
Fig. 1 shows laser confocal microscope scanning images of carbon nanotubes with nucleic acid fragments, wherein yellow-green color indicates fluorescent Cy3-molecules attached to nucleic acid fragments and the dark regions indicate nanotubes;
Fig. 2 shows (A) an SEM image of the oxidation purified CNT's completely dispersed and free of contamination and (B) a TEM image of a DNA-oligonucleotide with 60 bp stained with uranyl acetate and shadowed with a thin coating of platinum, indicating that the decorated DNA-oligonucleotide has a linear structure;
Fig. 3 shows HRTEM images and EDX spectra of carbon nanotubes with nucleic acid fragments labelled with platinum nanoparticles, wherein (A) shows an image of a Pt labelled DNA fragment in the absence of nanotubes, (B) shows an image of a Pt labeled DNA fragment partially drawn into a linear strand inside a multiwall nanotube wherein the part of DNA outside the nanotube remains in a folded conformation, the TEM image was obtained at the accelerating voltage of 200 KV, and (C) shows the EDX spectrum showing the presence of C, N, O, P and Pt peaks in the vicinity of the Pt particle.;
Fig. 4 shows (A) simulation snapshots of a DNA-oligo (8 adenin basis) interacting with a (10, 10) carbon nanotube at 0, 30, 100 and 500 ps wherein water molecules are not displayed for clarity;
Fig. 5 shows the normalized center-of-mass distances between the oligonucleotide and the carbon nanotube as a function of the simulation time wherein do is the initial center-of-mass seperation;
Fig. 6 shows radio density profiles of water and oligonucleotide within nanotube and units of water bulk density ρ₀, averaged over cylindrical shells centred at the axis of the nanotube, with radius r and height determined by the carbon atoms at the nanotube rim, R₀ = 0.68 nm being the nanotube radius;
Fig. 7 shows the van der Waals energy between nanotubes and the first DNA base entering the nanotube as function of their axial-direction projected COM distance d_{z}; and
Fig. 8 shows snapshots (sideview a, c and top view b, d) of an oligonucleotide-nanotube system simulated after 2ns, wherein water molecules are not shown.

The possibility of encapsulating DNA inside CNT in a water solute environment has been explored. DNA has a double stranded helical structure with diameter of 2nm at room temperature and denatures into single strands at temperatures above 98°C when the hydrogen bonds between paired bases are destroyed. DNA is easy to synthesize and has high specificity of interaction and conformational flexibility. The complementary base-paring properties of DNA have been used to make 2-dimensional crystals and prototypes of DNA computers and electronic circuits. DNA forms not only two-stranded secondary structures, but also three-, four-, and multistranded structures and is used as frayed wires.

Multiwall carbon nanotubes 40-70 nm in outer diameter, 10-20 nm in the diameter of the inner wall and 200-500 nm in length were firstly selected. DNA fragments of different lengths including 60bp DNA oligonucleotides and double strand DNA fragments with 400bp were diluted in ion-free water to a concentration of 100µg/ml. The multi-walled carbon nanotubes were dissolved in ion-free water to a concentration of 10µg/ml.

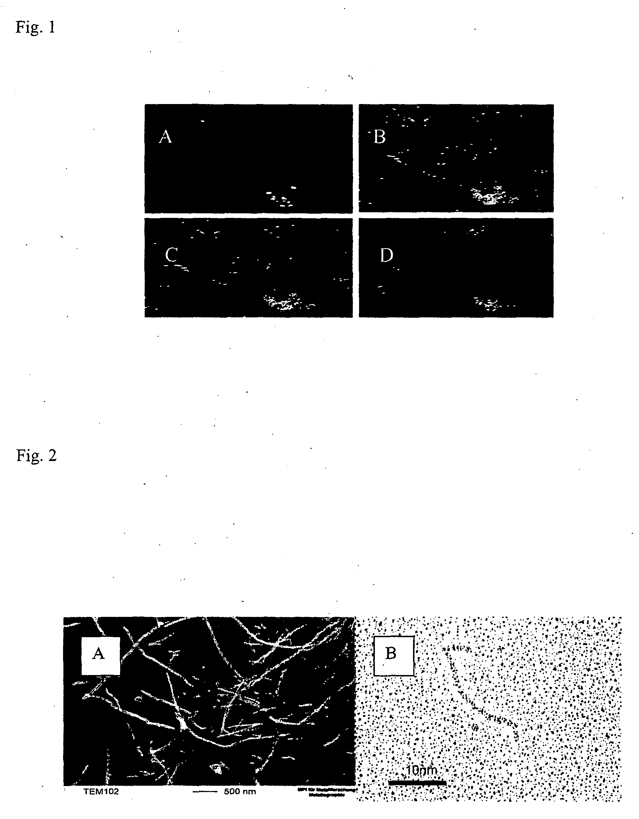

Laser confocal microscopy was used to observe the purified mixture of carbon nanotubes and 60bp DNA oligonucleotides labeled with Cy3 dye, which has treated for 20 minutes under the condition of 400k and 3 bar and the DNA-oligos attached to the side wall of nanotubes were largely removed by 1.2% agarose gel electrophoresis. Figure 1 shows the consecutive laser confocal microscope scanning images of carbon nanotubes with DNA oligonucleotides. Yellow-green colour indicates DNA oligonucleotides labelled with fluorescent Cy3 molecules and the dark regions indicate carbon nanotubes. Figure 1A showed that yellow-green colour regions are very limited. Figure 1 B and Figure 1 C showed that yellow-green colour regions are almost evenly distributed in the area of carbon nanotubes, highly indicating DNA likely locate inside carbon nanotubes. Figure 1 D showed that yellow-green colour regions were very weak compared with Figure 1 B and Figure 1C. These consecutive pictures highly showed that DNA oligonucleotides likely located inside carbon nanotubes.

In the experiments, 60bp DNA-oligos were labeled and purified with florescent molecule Cy3 by Label IT Cy ™3 Nucleic Acid Labeling Kit (Mirus Company, Lot Number 6361-02). The labeled products mixed fully with nanotubes at a mass ratio of 10:1 and incubated for 20 minutes under the condition of 400K and 3bar. At this stage, it was expected that most of the DNA-oligos are attached to the side wall while a few have entered into the interior of the CNTs. The DNA-oligos attached to the side wall of nanotubes were largely removed with purification by 1.2% agarose gel electrophoresis, finally the sample was subjected to laser confocal microscopy. Purified MWCNT's were coated over the surface of copper a grid and observed by SEM. 60bp DNA-oligonucleotides were stained with uranyl acetate and shadowed with a thin coating of platinum, and were observed via TEM.

Scanning electron microscopy (SEM) was also useful to examine the mixture of CNT and DNA. DNA fragments of 2kb length were fully mixed with nanotubes at a mass ratio of 10:1 1 and incubated for 20 minutes under 400K and 3bar. The sample was then prepared for SEM observation. Figure 2A shows an SEM image of the oxidation purified CNT's completely dispersed and free of contamination. Figure 2B shows a TEM image of a DNA-oligonucleotide with 60 bp stained with uranyl acetate and shadowed with a thin coating of platinum, indicating that the decorated DNA-oligonucleotide has a linear structure.

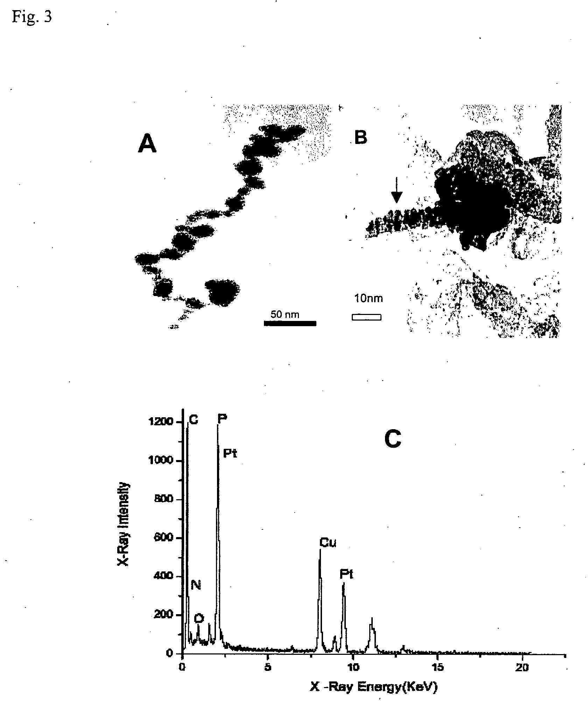

In order to further confirm DNA can be encapsulated inside carbon nanotubes, we selected 400 bp DNA fragments as target molecules and decorated with 2nm Pt nanoparticles. The Platinum nanoparticles spontaneously combine with DNA fragments via covalent bonding. Figure 3A is an image of DNA fragments labeled with Pt nanoparticles, showing that DNA fragments labeled with Pt nanopartilces are linear strands. In the absence of DNA, Pt nanoparticles would only form very short clusters, only in the presence of DNA fragments are long linear strands observed.

More direct evidence of DNA encapsulation inside CNT was obtained with high resolution transmission electron microscopy (HR-TEM) and energy dispersive x-ray spectroscopy (EDX). Figure 3B is an image of DNA fragment labelled with Pt partially inside a carbon nanotube. Part of the DNA fragment has been drawn into a linear strand inside the nanotube, while the part outside the nanotube remains in a folded conformation. This picture vividly describes the DNA encapsulation process.

The presence of DNA fragment (labelled with Pt nanoparticles) inside a nanotube was further confirmed via EDX analysis as shown in Figure 3C. The EDX spectrum was obtained with a 1.2 nm probe focused in the vicinity of the platinum particle. The spectrum consists of C, N, O, P and Pt peaks, indicating the chemical composition of the DNA phosphate backbone. The carbon peak has the highest amplitude due to the presence of the nanotubes and the holey carbon from the grid sample holder (in addition to the copper line). The TEM image and EDX patterns provide clear evidence for DNA encapsulation inside CNT.

In order to further investigate the potential mechanism of encapsulating DNA molecules inside carbon nanotubes, we finished two control experiments. Pt, Fe, etc metal particles can be spontaneously encapsulated inside catbon nanotubes at room temperature for several days. We fully mixed Pt decorated DNA molecules with carbon nanotubes and put at room temperature and kept for several days, Pt decorated DNA molecules exhibited even distribution on the surface of carbon nanotubes similar to the results as reported by Zijian Guo, et al, no Pt decorated DNA were found inside CNTs. This experiment highly indicated that Pt particles are very difficult to take DNA molecules inside CNTs. We also observed the mixture of Pt particles and CNTs treated under 400k and 3bar via HR-TEM. Very few Pt particles were found inside carbon nanotubes. Therefore, it is very lower possibility that Pt particles bring DNA molecules inside carbon nanotubes under 400k and 3bar.

Regarding the mechanism of Pt-DNA complexes entering inside the CNTs, our previous molecular dynamics simulations indicated that the van der Waals attraction between CNT and DNA-oligonucleotides constitutes the primary driving force for DNA-oligonucleotides entering the CNT^{[20]}. A temperature of 400 K provided evenly distributed kinetic energy for the Pt -DNA complexes in the liquid so that Pt-DNA complexes keep the active movement states; hence, under the van der Waals attraction between CNT and Pt-DNA complexes, the latter are driven spontaneously inside a CNT. We believe that the applied pressure of 3 Bar kept the mixture of Pt-DNA complexes and CNT's at the liquid state and prevented the evaporation of the media during the encapsulation process. Further investigations are underway to understand the exact nature of the effect of pressure.

400bp DNA fragments labelled with Pt nanoparticles were prepared as follows: 1µl 100µg/ml DNA solution was added into 65µl of 1mM solution of K₂PtCl₄ , mixed and then incubated at room temperature for 20h, and then added 1µl of 10mM DMAB solution into the mixture, and kept at 27°C for 18h. The DNA fragments labeled with Pt nanoparticles were fully mixed with CNTs at a mass ratio 10:1 and incubated for 20 mintues under 400K and 3bar. The products were purified by 1.2% agarose gel electrophoresis to get rid of the unattached platinum and DNA fragments that are free or loosely attached to the side wall of CNTs. The TEM sample preparation was conducted by coating the CNT-Pt DNA solution over holey carbon copper TEM grids and drying them under a nature status for several hours. The samples were imaged using a Philips CM 200 microscope under excitation voltages of 200 KeV. The same samples were subjected to EDX analysis with 1.2nm probe size in a VG 501 scanning transmission microscope at an accelerating voltage of 100 kV.

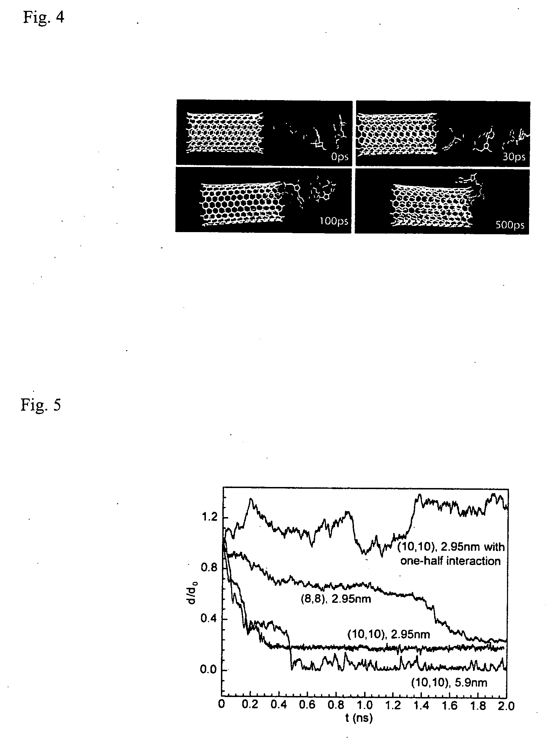

In order to understand the physical mechanisms for the insertion of DNA-oligo into CNT, molecular dynamics simulations have been performed to study the interaction between a homogeneous single-strand DNA oligonucleotide with 8 adenine bases and an uncapped armchair (10, 10) carbon nanotube (2.95 nm long and 1.36 nm in diameter). As initial configuration, CNT and DNA were aligned along the nanotube axis and separated by 0.6nm. The CNT-DNA complex was solvated in a water reservoir and its dynamics was simulated for 2ns at temperature 400K and pressure 3bar. A time-step of 1fs was used and full-precision trajectory was recorded every 1ps. The snapshots of the oligonucleotide-nanotube system shown in Fig. 4 indicated a very fast insertion process of oligonucleotide into nanotube. At t = 30ps, the first base of the oligonucleotide has begun to enter the nanotube. After 500ps, five of the eight DNA bases are fully inside the nanotube and the first base has reached the opposite end of the tube. The last DNA base remains outside and attach to the sidewall. Correspondingly, the centre of mass (COM) distance *d* (Fig. 5) between oligonucleotide and carbon nanotube rapidly decreases with time up to 500ps. The nearly constant d afterwards indicated that the system has reached equilibrium.

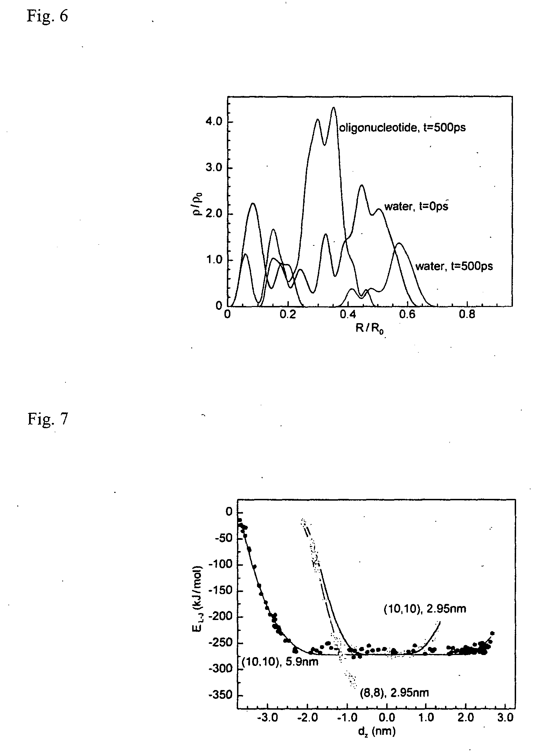

In order to reveal the physical mechanisms of the insertion process of oligonucleotide, we plot the normalized radial density profiles of water and oligonucleotide within nanotube in Fig. 6. Due to the hydrophobic property of carbon nanotubes, water molecules inside CNT exhibits a continuous radial distribution only up to *R* ∼ 0.7*R*₀ (*R*₀ = 0.68nm) after equilibration at 0ps. The radial density of water inside CNT gradually decreased during the simulation. The water density profile at 500ps showed a discontinuous region between 0.25*R*₀ and 0.35*R*₀, where the radial density of oligonucleotide entering the nanotube exhibits a maximum. This demonstrated that during the insertion of oligonucleotide some of water molecules inside the nanotube have been repelled out of the nanotube. The water molecules inside nanotube is three-dimensionally structured and the induced difference in the hydrogen-bond energy of water should be negligible. Since the water molecules were initially trapped inside CNT due to van der Waals attraction, the repelling of water molecules to outside of CNT is energetically costly and provides an effective resistance for DNA insertion. It was further observed that the oligonucleotide entering CNT formed a hydrophobic tubular-like shell within the nanotube, with the remaining water molecules inside CNT confined near the nanotube centre along the tube axis and between the tube wall and the oligonucleotide.

Strong hydrogen-bond interaction among water molecules is known to produce hydrophobic forces that cause hydrophobic solutes (both CNT and DNA) to aggregate to reduce solvent-solute interface energy. This hydrophobic effect alone is however found to be insufficient to encapsulate DNA due to resistance from water molecules inside CNT. On the other hand, carbon nanotube and oligonucleotide will also experience an attractive force from each other due to van der Waals interaction when their separation is about 1nm or smaller. This attractive interaction is found to play a dominant role in the DNA insertion process. The derived van der Waals energy between nanotube and the first DNA base entering the nanotube (Fig. 7) confirmed rapid decrease in the interaction potential energy with distance. The flat bottom of the van der Waals potential well in the middle of nanotube is about 2nm in width, which traps the DNA molecule inside CNT. The importance of van der Waals force is demonstrated by the following analysis. We reduced the interaction between carbon nanotube and oligonucleotide atoms and repeated the simulation.

Depending upon the nanotube length, the DNA-CNT systems were solvated in periodic 5×5×9nm or 5×5×12nm box with SPC216 water as solvent. Particle-mesh-ewald method with cubic-spline interpolation was applied to evaluate electrostatic interaction and sodium ions were added as counter-ions to compensate negative net charges on oligonucleotide. We used GROMACS force field based on GROMOS-87 to model atomic interactions in DNA oligonucleotide and DNA-water interaction. The carbon atoms of nanotubes were treated as uncharged Lennard-Jones particles with σ_{CC} = 0.385 nm and ε_{CC} = 0.4396 kJ/mol. The carbon-carbon bond lengths of 0.142 nm and bond angles of 120° were maintained by a Morse bond, a harmonic cosine angle and a cosine torsion potential. The nanotube-water Lennard-Jones parameters were σ_{CO} = 0.319 nm and ε_{CO} = 0.3126 kJ/mol. Geometry average was taken as combination rules for setting Lennard-Jones parameters for interactions between nanotube and DNA atoms. We also conducted simulations with reduced nanotube-DNA interaction by simply changing the value of σ_{CC}. We found that the insertion process of oligonucleotide is dramatically slowed down by a small reduction of van der Waals force. With 50% reduction in the interaction, as indicated by the derived COM distance in Fig. 5, the oligonucleotide only made random motion around the nanotube and no base entered the nanotube. To clarify the role of hydrophobic force, we simulated carbon nanotube interacting with polypeptide molecules. The attraction of a hydrophilic polypeptide toward CNT was found to cause peptide insertion into CNT but the process is severely hindered in comparison with DNA oligonucleotides despite of comparable van der Waals interaction in both cases. These observations suggest that both van der Waals attraction and hydrophobic interaction between nanotube and DNA play important roles in encapsulating molecular clusters or nanoparticles inside CNT. In the case of DNA, the van der Waals attraction force is found to be dominant.

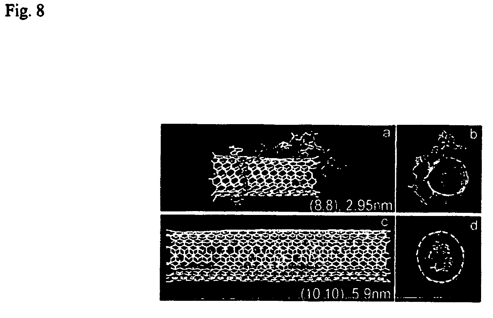

Since both the depth of the van der Waals potential well and the size of its flat region in the middle of CNT depend on the diameter and length of CNT, the insertion process of oligonucleotide is expected to be tube-size dependent. To explore the size effect of the insertion process, we repeated molecular dynamics simulations of the DNA-CNT system with two different carbon nanotubes: armchair (8, 8) with 2.95nm in length and 1.08nm in diameter, and (10,10) with doubled length (5.90nm). The derived COM distances were also plotted in Fig. 5 and the snapshots of the simulated oligonucleotide-nanotube systems at 2ns were presented in Fig. 8. Despite of deeper van der Waals potential well than the (10, 10) tube, the (8,8) carbon nanotube cannot attract more than one DNA base into its inside. It was observed that up to 2ns the remaining seven DNA bases gradually wrap around the outside of the (8,8) nanotube. A possible explanation is that the diameter of the (8,8) nanotube is too small and the oligonucleotide has to be severely deformed in order to enter the nanotube. The deformation-induced energy could overcompensate the reduction in van der Waals and hydrophobic interaction energies. It suggests that the diameter (1.08nm) of (8,8) nanotube is the critical size for inserting a single strand DNA into CNT. For the (10,10) nanotube with doubled length, the flat part in its van der Waals potential well is much larger. The oligonucleotide completely entered the nanotube after 500ps.

In conclusion, the experimental results clearly show that DNA molecules can be encapsulated inside carbon nanotubes. The insertion process can further be used for the encapsulation of a variety of particles including metallic and semiconductor particles inside carbon nanotubes. In addition, molecular dynamics simulations have indicated that DNA could be encapsulated inside carbon nanotube in a water solute environment via an extremely rapid dynamic interaction process, provided that the tube size exceeds certain critical value. Both the van der Waals and hydrophobic forces are found to be important, with the former playing a more dominant role on DNA-CNT interaction.

The present invention has general implications on filling nanoporous materials with water solutes of molecular clusters or nanoparticles. Since carbon nanotubes possess many unique electrical, chemical, mechanical and biological properties, the DNA-CNT or other CNT based bio-nano-complex can be further exploited for applications in molecular electronics, molecular sensors, electronic DNA sequencing, and nanotechnology of gene delivery systems and has potential applications in molecular electronics, chemical sensors, field emission devices, biological engineering and clinical medicine.

## Claims

1. A method for encapsulating a biomolecule, in particular a DNA molecule, inside a carbon nanotube with the steps of
(a) providing the carbon nanotube;
(b) providing the biomolecule; and
(c) passively and/or actively encapsulating the biomelecule inside the carbon nanotube.

2. The method according to claim 1, wherein the biomolecule is passively encapsulated inside the carbon nanotube by van der Waals interactions and/or hydrophobic forces.

3. The method according to claim 1, wherein the biomolecule is actively encapsulated inside the carbon nanotube by changing the charge state of the carbon nanotube.

4. The method according to any of claims 1 to 3, wherein the biomolecule is a single-strand DNA-oligonucleotide.

5. The method according to any of claims 1 to 3, wherein the biomolecule can be double-strand DNA-oligonucleotide, gene fragments or entire piece of gene.

6. The method according to claim 1 to 2, wherein the biomolecule is encapsulated under elevating temperature and pressure.

7. The method of purifying the encapsulated bio-nano system, wherein the side-attached molecules are removed by electrophoresis.

8. A bio-nano system comprising a carbon nanotube and a biomolecule, in particular a DNA molecule, wherein the biomolecule is encapsulated inside the nanotube.

9. The system according claim 5, wherein the biomolecule is a single-strand DNA-oligonucleotide.

10. The system according to claim 5 or 6, wherein the carbon nanotube has a diameter larger than 1nm.

11. Use of the bio-nano system according to any of claims 5 to 7 for DNA modulated molecular electronics, molecular sensors, electronic DNA sequencing, nanotechnology of gene drug delivery systems, and/or for the preparation of a pharmaceutical composition.
